Europäisches Patentamt

(19) European Patent Office    (11) Publication number: **0 063 567**
Office européen des brevets                                **B1**

(12) **EUROPEAN PATENT SPECIFICATION**

(45) Date of publication of patent specification: **10.07.85**    (51) Int. Cl.⁴: **C 25 C 1/20**

(21) Application number: **81902010.8**

(22) Date of filing: **07.07.81**

(86) International application number:
**PCT/SE81/00206**

(87) International publication number:
**WO 82/00303 04.02.82 Gazette 82/04**

(54) **A PROCESS FOR RECOVERING NOBLE METALS.**

(30) Priority: **11.07.80 SE 8005137**

(43) Date of publication of application:
**03.11.82 Bulletin 82/44**

(45) Publication of the grant of the patent:
**10.07.85 Bulletin 85/28**

(84) Designated Contracting States:
**AT CH DE FR GB LI NL SE**

(56) References cited:
**GB-A- 2 493**
**GB-A- 18 177**
**GB-A-2 003 185**
**NO-C- 22 861**
**US-A-3 904 497**
**US-A-4 204 922**

(73) Proprietor: **SÖDERMARK, Nils-Erik**
**Box 101**
**S-731 01 Köping (SE)**
(73) Proprietor: **JANNE, Jouko**
**Borgmästaregatan 18**
**S-731 00 Köping (SE)**

(72) Inventor: **JANNE, Jouko**
**Kihlmansgatan 28C**
**S-751 00 Köping (SE)**

(74) Representative: **Burman, Tore et al**
**Bergling & Sundbergh AB P.O. Box 7645**
**S-103 94 Stockholm (SE)**

Courier Press, Leamington Spa, England.

## Description

Technical Field

The present invention relates to a process for recovering noble metals from sludge, waste or other material containing noble metals by electrolysis. The invention is particularly useful for recovery of noble metals, mainly silver and gold, from materials of different types, such as process waters discharged from goldsmith and silversmith industries and from waste, dust and used grinding means based on paper or textile supports and dry polishing waxes and chips, all such products containing particle of noble metals.

The waste water from such industries is on the one hand wash water, also containing ammonia, from grinding and tumbling processes, on the other hand cyanide-containing liquids from silver and gold plating and so-called deplating. Moreover, in the operation of such industries there is formed wastes, such as dust and sweepings and spent grinding means, such as polishing waxes and polishing bands of paper or textile. The solid waste products contain such large quantities of noble metal particles that the recovery thereof is of the utmost importance for economy, particularly in view of to-day's prices on noble metals. At an industry for gold and silversmith works of an average size the quantity of waste is of the order of 250 liters per day having a gold content of up to 140 mg per liter and a silver content of up to 20 mg per liter.

If all noble metals in these waste products had been in the form of soluble salts then ordinary electrolyses would have been an obvious solution to the problem of recovering the metals. This is, however, not the case but the major part of the noble metals are present as solid metallic particles.

Against this background it is desirable to find a simple and economic process according to which the noble metals can be recovered from liquid wastes, wherein the metals may partly be present in ionic form, as well as in the waste where the metals are present in the form of solid particles. A solution to this problem could, of course, also be applied to sludges and wastes from noble metal mines and ore concentrating works, where the materials contain noble metals in the form of solid particles.

Background Art

Electrolysis for recovering noble metals from solution has been known for a long time and there are several patent specifications dating back as far as before the turn of the century disclosing such techniques. As examples there may be mentioned Swedish patent No. 735, and British patent specifications 3873/1883 and 2493 and 18177/1895. According to British Patent No. 2493/1895 a solution of chlorine, bromine or potassium cyanide is mixed with a noble metal containing ore and noble metal is deposited electrolytically at a cathode forming the bottom and optionally a portion of the sides of a stirred vat containing the mixture.

Summary of the Invention:

The solution to the problem of recovering noble metals according to the invention lies in a process as claimed in claims 1—6 wherein there is used for the electrolysis a vessel in the form of a standing or substantially vertical cylinder the walls of which constitute the anode. The vessel contains at least one cathode arranged at a distance from the said walls of the vessel. The invention is based upon the surprising discovery that imparting a rotary motion of such a magnitude to the mixture that the noble metal particles are transported to the walls of the vessel acting as an anode will bring about efficient dissolution of the noble metals by anodic oxidation on the walls of the vessel. By utilizing the centrifugal force in a rotating mixture of materials to be electrolyzed the noble metal particles dispersed in the solution are thrown out onto the interior walls of the electrolyzing vessel to form a part of its anode surface.

After being brought into solution the noble metal cations are transferred to the cathode where they are reduced by cathodic reduction and deposited on the cathode.

It is preferred to use a stirring action to provide for the rotary motion of the slurry to be electrolyzed, and it is particularly preferred to use a propeller which is operated at such a speed that air us sucked into the mixture of materials to be electrolyzed.

The invention is paticularly suitable to use in a process as outlined above wherein the material to be electrolyzed contains cyanide ions. In this case there is added a further step of replacing the cathode with noble metals deposited thereon with another electrode and reversing the direction of current to destroy the cyanide ions by anodic oxidation to deposit carbon at the anode. During this latter electrolyzing step intense mixing is maintained in the vessel. In this manner the electrolyzing period can be substantially reduced, and, surprisingly, carbon is found to be deposited at the anode.

In depositing the noble metals by electrolysis on the cathode the voltage used is preferably within the range about 3 to 16 volts and the current density is suitably about 1 to 1.5 A per $dm_2$. In the latter step of destroying the cyanide ions a suitable current density is about 3 to 3.5 A per $dm_2$.

Example

The invention will be further illustrated in the following by a non-limiting specific example in conjunction with the appended drawing, wherein:

Fig. 1 shows a sectional side view of an electrolyzer for carrying out the invention;

Fig. 2 shows a front view of the electrolyzer of Fig. 1; and

Fig. 3 shows a top view of the electrolyzer of Fig. 1.

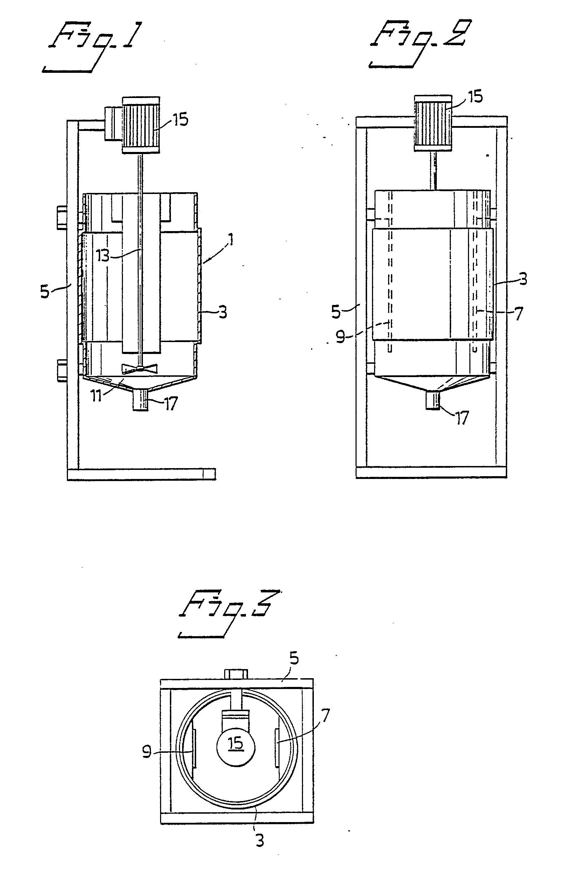

In the drawing, the electrolyzer shown is generally designated 1. The electrolyzer 1 includes a vertical cylindrical vessel 3 attached to fixture or stand 5. The vessel 3 contains vertically extending cathode plates 7, 9, whereas the vessel 3 proper constitutes anode. The vessel 3 is connected to the positive electrode of a source of direct current, whereas the cathode plates 7, 9 are attached to the negative electrode. All these features are conventional in tha art and therefore not shown in the drawing.

The vessel 3 contains a centrally positioned propeller 11 connected by a shaft 13 to a motor 15 for its operation. At the lower end vessel 3 is provided with a discharge pipe 17.

All parts of the electrolyzer 1 coming into contact with the solution or material to be electrolyzed are made of acid-resistant steel.

In the instant example the electrolyzing vessel 3 has a volume of about 300 liters and the propeller 11 is positioned about 10 cm above the bottom of vessel 3.

In electrolyzer 1 liquid and solid wastes from a gold and silver smith's plant is treated. The daily volume of waste liquid is about 200 liters. To the combined wastes there is added 1 kg of sodium cyanide resulting in a cyanide content of about 0.5% by weight. The propeller 11 is started to accelerate the dissolution of the cyanide and to disperse the solid waste products. The propeller is operated at such speed that air is sucked into the liquid and the particles suspended in the liquid are thrown against the bottom and side walls of vessel 3 with a sufficient force to bring the particles into contact with the walls functioning as an anode. In the instant case a speed of about 900 revolutions per minute for the propeller has been found to be suitable. The current density for the electrolysis was 150 to 200 A and the voltage was about 16 volts using a total cathode surface of 1.6 $m^2$ formed by four cathode plates each having the dimensions 1.0 × 0.2 meters.

By using the process according to the invention it is thus possible to recover as a deposit on the cathode plates silver and gold from the wastes at a high yield. When the metals have been recovered there will be obtained a residual electrolyte solution containing cyanides which have to be destructed before the solution can be transferred to a municipal sewage system. This destruction can be carried out in a conventional manner by oxidation of the cyanides to cyanates using for example sodium hypochloride or by anodic oxidation.

To the electrolyte remaining in vessel 3 there is added an alkali metal halide, preferably sodium chloride, to a concentration of about 1% by weight and a base, preferably sodium hydroxide, to give the solution a pH-value of about 11 or more. Cathode plates 7, 9 having deposited noble metals thereon are replaced by new electrode plates and the direction of current is reversed so that such new electrode plates will become anodes and the walls of the vessel 3 will function as a cathode. Stirring using the propeller 11 is maintained and electrolysis is performed using a current density of about 400—500 A at 16 volts. After a period of time of about 15 minutes the contents of the solution of cyanides heve been destroyed by anodic oxidation and the anode plates have deposited thereon a layer of pure carbon.

It is to be noted that the invention is not delimited to the above example. Thus, as anions in the electrolyte there may be used any anions forming water-soluble salts with the noble metals in question, such as cyanide, sulphate or nitrate ions, the ions being used at a concentration corresponding to that used in the electrolyte in connection with electrolytic refining of noble metals.

Moreover, the invention is not delimited to treatment of material originating from gold and silver smith plants but can be generally used for recovery of finely divided noble metal particles from sludges and dispersions. Furthermore, any cyanide-containing solution can be treated in accordance with the techniques of the invention.

**Claims**

1. A process for recovering noble metals from sludge, waste or other material containing noble metals by electrolysis to deposit the metals at the cathode, the electrolysis being performed in an electrolyzing vessel in the form of an upstanding cylinder the walls of which constitute the anode and which contains at least one cathode arranged at a distance from said walls, characterized by admixing the material in said vessel in a solution containing anions capable of forming water-soluble salts with the noble metals to be recovered, and imparting such a rotary motion to be mixture that the noble metal particles are transported to the walls of the vessel acting as an anode while subjecting the mixture to electrolysis to bring the noble metals into solution at the anode by anodic oxidation and deposit them at the cathode by cathodic reduction.

2. A process according to claim 1, characterised by electrolyzing the mixture at a voltage of about 3 to 16 volts and a current density of about 1 to 1.5 $A/dm_2$.

3. A process according to claim 1 or 2, characterized by using stirring action to provide for the rotary motion.

4. A process according to claim 3, characterized by using a propeller which is operated at such a speed that air is sucked into the mixture.

5. A process according to any of claims 1 to 4, wherein the material to be electrolyzed contains cyanide ions, comprising the further step of replacing the cathode with noble metals deposited thereon with another electrode and reversing the direction of current to destroy the cyanide ions by anodic oxidation to deposit carbon at the anode, while maintaining intense mixing in the vessel.

6. A process according to claim 5, characterized by using in said further step a current density of about 3 to 3.5 $A/dm_2$.

**Patentansprüche**

1. Verfahren zur Gewinnung von Edelmetallen aus einem Shlamm, Abfall oder anderem Material mit Edelmetallgehalt durch Elektrolyse unter Abscheidung der Metalle an der Kathode, wobei die Elektrolyse in einem Elektrolysiergefäß in der Form eines stehenden Zylinders erfolgt, dessen Wände die Anode darstellen und der wenigstens eine in einem Abstand von den Wänden angeordnete Kathode enthält, dadurch gekennzeichnet, daß man das Material in dem Gefäß mit einer Lösung vermischt, die Anionen enthält, welche mit den zu gewinnenden Edelmetallen wasserlösliche Salze bilden können, und dem Gemisch eine derartige Drehbewegung erteilt, daß die Edelmetallteilchen zu den als Anode wirkenden Wänden des Gefäßes transportiert werden, während das Gemisch einer Elektrolyse unterzogen wird, um die Edelmetalle an der Anode durch anodische Oxidation in Lösung zu bringen und sie an der Kathode durch kathodische Reduktion niederzuschlagen.

2. Verfahren nach Anspruch 1, dadurch gekennzeichnet, daß das Gemisch mit einer Spannung von etwa 3 bis 16 Volt und einer Stromdichte von etwa 1 bis 1,5 A/dm$_2$ elektrolysiert wird.

3. Verfahren nach Anspruch 1 oder 2, dadurch gekennzeichnet, daß man eine Rührwirkung verwendet, die die Drehbewegung erzeugt.

4. Verfahren nach Anspruch 3, dadurch gekennzeichnet, daß man einen Propeller verwendet, der mit solcher Geschwindigkeit arbeitet, daß Luft in das Gemisch gesaugt wird.

5. Verfahren nach einem der Ansprüche 1 bis 4, bei dem das zu elektrolysierende Material Cyanidionen enthält, mit der zusätzlichen Stufe, in der man die Kathode mit darauf abgeschiedenen Edelmetallen durch eine andere Elektrode ersetzt und die Stromrichtung umkehrt, um die Cyanidionen durch anodische Oxidation zu zerstören und Kohlenstoff an der Anode abzulagern, während man des intensive Mischen in dem Gefäß aufrechthält.

6. Verfahren nach Anspruch 5, dadurch gekennzeichnet, daß man in dieser weiteren Stufe eine Stromdichte von etwa 3 bis 3,5 A/dm$_2$ anwendet.

**Revendications**

1. Un procédé pour récupérer des métaux nobles à partir de boues, de résidus ou d'autres matériaux renfermant des métaux nobles par électrolyse de façon à déposer les métaux sur la cathode, l'électrolyse étant réalisée dans un récipient d'électrolyse sous la forme d'un cylindre vertical dont le parois constituent l'anode et qui renferment au moins une cathode disposée à une certaine distance desdites parois, caractérisé en ce que l'on mélange le matériau dans ledit récipient avec une solution renfermant des anions susceptibles de former des sels solubles dans l'eau avec les métaux nobles à récupérer, et que l'on imprime au mélange un mouvement rotatif tel que les particules de métaux nobles sont transportées vers les parois du récipient faisant office d'anodes tout en soumettant le mélange à une électrolyse pour amener les métaux nobles en solution à l'anode par oxydation anodique et à les déposer à la cathode par réduction cathodique.

2. Un procédé selon la revendication 1, caractérisé en ce que l'on hydrolyse le mélange sous une tension d'environ 3 à 16 volts et avec une densité de courant d'environ I à 1,5 A/dm$_2$.

3. Un procédé selon la revendication 1 ou 2, caractérisé en ce que l'on met en oeuvre une agitation pour obtenir le mouvement de rotation.

4. Un procédé selon revendication 3, caractérisé en ce que l'on utilise une hélice que l'on fait fonctionner à une vitesse telle que l'air est aspiré dans le mélange.

5. Un procédé selon l'une quelconque des revendications 1 à 4, dans lequel le matériau à électrolyser renferme des ions cyanure, comprenant le stade additionnel de remplacer la cathode avec les métaux nobles qui sont déposés par une autre électrode, et à inverser la direction de courant pour détruire les ions cyanure par oxydation anodique afin de déposer le carbone sur l'anode, tout en maintenant un mélangeage intense dans le récipient.

6. Un procédé selon la revendication 5, caractérisé en ce que l'on met en oeuvre dans ce stade additionnel une densité de courant d'environ 3 à 3,5 A/dm$_2$.

Fig. 1

Fig. 2

Fig. 3